# EUROPEAN PATENT SPECIFICATION

(11) **EP 3 293 786 B1**
(45) Date of publication and mention of the grant of the patent: **19.06.2019**
(21) Application number: 17189788.7
(22) Date of filing: 07.09.2017
(51) Int. Cl.: H01M 2/10, H01M 2/20

(54) **BATTERY PACK WITH BUSBAR FIXATION**
BATTERIEPACK MIT STROMSCHIENEN-FIXIERUNG
MODULE DE BATTERIES COMPRENANT FIXATION DE BARRE CONDUCTRICE

(30) Priority: 07.09.2016 US 201662384298 P; 24.03.2017 US 201715468622
(43) Date of publication of application: 14.03.2018
(73) Proprietor: Thunder Power New Energy Vehicle Development Company Limited, Central, Hong Kong (CN)
(72) Inventor: MASTRANDREA, Francesco, Central Hong Kong (CN); TUTZER, Peter, Central Hong Kong (CN)
(74) Representative: Loustalan, Paul William

(56) References cited:
- US-A1- 2011 293 998
- US-A1- 2015 086 830
- US-A1- 2015 179 995

## Description

### BACKGROUND

An electric vehicle uses one or more electric motors powered by electrical energy stored in a rechargeable battery system. Lithium-based batteries are often chosen for their high power and energy density. In order to ensure that an electric vehicle operates efficiently and safely, the temperature of the battery system must be maintained within a defined range of optimal temperatures. The coolant system of electric vehicle can be physically extended to the battery system to remove excess heat, thereby increasing the service life of the battery system and increasing the distance that can be traveled on a single charge.

As the popularity of electric vehicles increases, efficiency in the manufacturing process will become more important. Processes and devices that decrease the cost of manufacturing battery systems while simultaneously increasing their reliability and safety will be key to meeting customer demands. Specifically, there is a need for processes and devices that ensure reliable electrical connections between individual battery cells, that efficiently cool the battery system, and that aid in the manufacturing process of assembling the thousands of individual battery cells into modular systems that can be installed and replaced when necessary.

US 2015/0086830 A1 describes a heat-dispersing battery module which includes a top holding frame, a bottom holding frame, and a number of batteries. The bottom holding frame is connected to and spaced from the top holding frame, the bottom holding frame defines a number of bottom receiving holes each of which being aligned with a top receiving hole. Each battery includes an anode and a cathode. The batteries are positioned between the top holding frame and the bottom holding frame with the anodes of the batteries received in the top receiving holes and the cathodes of the batteries received in the bottom receiving holes.

US 2011/0293998 A1 describes a battery unit including a battery case, and a plurality of battery blocks stored in the battery case. The plurality of battery blocks are electrically connected together in series.

US 2015/0179995 A1 describes a battery pack comprising a battery holding member provided to have battery holding holes and configured to bind a plurality of batteries; a first bus bar arranged to electrically connect with terminals on the first side of the respective batteries; a second bus bar arranged to electrically connect with terminals on a second side in the axial direction of the respective batteries; a bus bar holding member configured to hold the second bus bar and constitute a wall surface on the second side of the casing; and a sealing sheet member configured to have a plurality of terminal exposing holes formed corresponding to the respective batteries and cause peripheries of the respective terminal exposing holes to come into contact with the end faces of the respective batteries, so as to prevent leakage of a gas from inside of the casing toward the second bus bar. The sealing sheet member has a deformation dividing part provided around at least part of the plurality of terminal exposing holes.

### BRIEF SUMMARY OF THE INVENTION

Aspects of the present disclosure relate to battery systems and methods of making and/or manufacturing the battery systems, and some aspects of the present disclosure relate to removably fixable attachments between trays configured to house battery cells of a rechargeable battery system.

One inventive aspect is a battery pack for an electric vehicle. The battery pack includes an upper tray, a first busbar attached to the upper tray, a lower tray, and a second busbar attached to the lower tray. The battery pack also includes a plurality of battery cells arranged in the upper and lower trays, and a reinforcement rib, integral to one of the upper and lower trays and protruding therefrom, mechanically connecting the lower tray to the upper tray. The other of the upper and lower trays comprises a slot configured to receive the reinforcement rib.

In some embodiments, the reinforcement rib is configured to transfer a vertical force between the upper and lower trays. In some embodiments, while the reinforcement rib transfers the vertical force between the upper and lower trays, the battery cells transfer substantially no force between the upper and lower trays.

In some embodiments, the reinforcement rib is at least partly integrated with the lower tray.

In some embodiments, the reinforcement rib is at least partly integrated with the upper tray.

In some embodiments, the reinforcement rib is separate from the upper and lower trays.

In some embodiments, the reinforcement rib extends into a hole through at least one of the upper and lower trays.

Another inventive aspect is a method of manufacturing a battery pack for an electric vehicle. The method includes attaching a busbar to an upper tray, attaching first sides of a plurality of battery cells to the upper tray, attaching a busbar to a lower tray, and attaching second sides of the battery cells to the lower tray. The method also includes connecting the lower tray and the upper tray with a reinforcement rib, integral to one of the upper and lower trays and protruding therefrom. The other of the upper and lower trays comprises a slot configured to receive the reinforcement rib.

In some embodiments, the reinforcement rib is configured to transfer a vertical force between the upper and lower trays. In some embodiments, while the reinforcement rib transfers the vertical force between the upper and lower trays, the battery cells transfer substantially no force between the upper and lower trays.

In some embodiments, the reinforcement rib is at least partly integrated with the lower tray.

In some embodiments, the reinforcement rib is at least partly integrated with the upper tray.

In some embodiments, the reinforcement rib is separate from the upper and lower trays.

In some embodiments, the reinforcement rib extends into a hole through at least one of the upper and lower trays.

Another inventive aspect is an electric vehicle powered by a battery pack, the battery pack including an upper tray, a first busbar attached to the upper tray, a lower tray, a second busbar attached to the lower tray, a plurality of battery cells arranged in the upper and lower trays, and a reinforcement rib, integral to one of the upper and lower trays and protruding therefrom, mechanically connecting the lower tray to the upper tray. The other of the upper and lower trays comprises a slot configured to receive the reinforcement rib.

In some embodiments, the reinforcement rib is configured to transfer a vertical force between the upper and lower trays.

In some embodiments, the reinforcement rib transfers the vertical force between the upper and lower trays, the battery cells transfer substantially no force between the upper and lower trays.

In some embodiments, the reinforcement rib is at least partly integrated with the lower tray.

In some embodiments, the reinforcement rib is at least partly integrated with the upper tray.

In some embodiments, the reinforcement rib is separate from the upper and lower trays.

In some embodiments, the reinforcement rib extends into a hole through at least one of the upper and lower trays.

### BRIEF DESCRIPTION OF THE DRAWINGS

A further understanding of the nature and advantages of the present invention may be realized by reference to the remaining portions of the specification and the drawings, wherein like reference numerals are used throughout the several drawings to refer to similar components. In some instances, a sub-label is associated with a reference numeral to denote one of multiple similar components. When reference is made to a reference numeral without specification to an existing sub-label, it is intended to refer to all such multiple similar components.
FIG. 1 illustrates a simplified diagram of an electric vehicle with a rechargeable battery system, according to some embodiments.
FIG. 2 illustrates a lithium-based battery that may be used in electric vehicles, according to some embodiments.
FIG. 3 is an illustration of a battery pack.
FIGs. 4A-4H is a series of views illustrating a process of manufacturing a battery pack.
FIG. 5 is a flowchart illustrating an embodiment of a process for manufacturing a rechargeable battery pack.
FIG. 6 is a flowchart illustrating one embodiment of a process 600 for manufacturing a vehicle having a rechargeable battery system.

### DETAILED DESCRIPTION OF THE INVENTION

Described herein are embodiments for providing a rechargeable battery system having a reinforcement rib support mechanism. The reinforcment rib provides mechanical support to the rechargeable battery system such that the battery cells are relieved from providing the support. The reinforcement rib is integrated with a tray holding the battery cells.

The reinforcement rib can have a variety of shapes and sizes. In some embodimetns, the reinforcement rib can have a polygonal cross-section, and/or any other desired shape of cross-section. In some embodiments, the reinforcement rib can be straight, curved, angled, zig-zag, serpentine, circular, or the like.

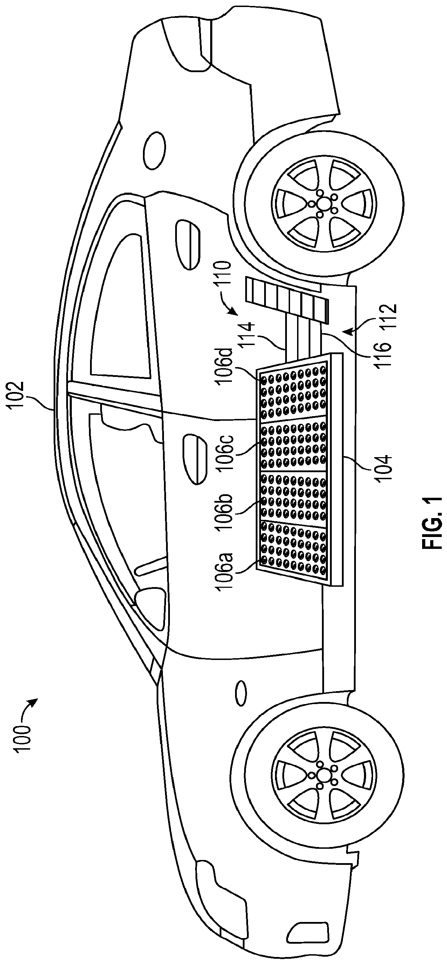

FIG. 1 illustrates a simplified diagram 100 of an electric vehicle 102 with a rechargeable battery system 104, according to some embodiments. The rechargeable battery system 104 may be comprised of one or more battery modules or packs 106. A battery pack may be comprised of a plurality of individual battery cells that are electrically connected to provide a particular voltage/current to the electric vehicle 102. In some embodiments, the battery cells forming the battery pack can be arranged in one or several rows of battery cells. Depending on the embodiment, the electric vehicle 102 may include hybrid vehicles that operate using both fuel combustion and stored electric power, as well as fully electric vehicles that operate entirely from stored electric power.

The rechargeable battery system 104 represents a major component of the electric vehicle 102 in terms of size, weight, and cost. A great deal of effort goes into the design and shape of the rechargeable battery system 104 in order to minimize the amount of space used in the electric vehicle 102 while ensuring the safety of its passengers. In some electric vehicles, the rechargeable battery system 104 is located under the floor of the passenger compartment as depicted in FIG. 1. In other electric vehicles, the rechargeable battery system 104 can be located in the trunk or in the hood areas of the electric vehicle.

While a smaller number of larger battery cells could be more energy-efficient, the size and cost of of these larger batteries are prohibitive. Furthermore, larger batteries require more contiguous blocks of space in the electric vehicle 102. This prevents larger batteries from being stored in locations such as the floor of the passenger compartment as depicted in FIG. 1. Therefore, some embodiments use a large number of smaller battery cells that are coupled together to generate electrical characteristics that are equivalent to single larger cells. The smaller cells may be, for example, the size of traditional AA/AAA batteries, and may be grouped together to form a plurality of battery packs 106. Each battery pack may include a large number of individual battery cells. In one embodiment, 700 individual lithium-ion batteries are joined together to form each of a number of single battery packs 106a, 106b, 106c, and 106d, and the rechargeable battery system 104 may include the four battery packs 106a, 106b, 106c, and 106d. In some embodiments, the rechargeable battery system 104 includ eight battery packs, ten battery packs, sixteen battery packs, or another number of battery packs, connected in parallel or series until the electrical requirements of the electric vehicle 102 are satisfied. The individual battery cells included in each battery pack 106 may total in the thousands for a single electric vehicle 102.

In some embodiments, the rechargeable battery system 104, and specifically one or several of the battery packs 106 can be connected to a heat exchanger 108 that can be a part of a cooling system 110. In some embodiments, the cooling system 110 can be part of the rechargeable battery system 104 and in some embodiments, the cooling system 110 can be separate from the rechargeable battery system 104. The cooling system 110 can include connecting lines 112 that can fluidly connec the heat exchanger 108 to one or several of the battery packs 106. The connecting lines 112 can include an inlet line 114 and an outlet line 116. The inlet line 114 can transport a cooling fluid, such as a refrigerant to the rechargeable battery system 104 and/or to one or several battery packs 106. In some embodiments, the cooling fluid can be contained in the cooling system 110, in the rechargeable battery system 104, and/or in one or several battery packs 106.

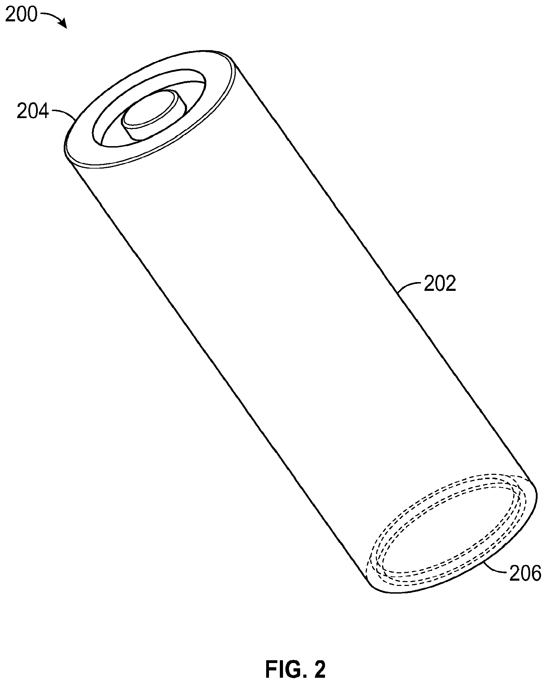

FIG. 2 illustrates a diagram 200 of a lithium-based battery 202 that may be used in electric vehicles, according to some embodiments. As used herein, the terms "battery", "cell", and "battery cell" may be used interchangeably to refer to any type of individual battery element used in a battery system. The batteries described herein typically include lithium-based batteries, but may also include various chemistries and configurations including iron phosphate, metal oxide, lithium-ion polymer, nickel metal hydride, nickel cadmium, nickel-based batteries (hydrogen, zinc, cadmium, etc.), and any other battery type compatible with an electric vehicle. For example, some embodiments may use the 6831 NCR 18650 battery cell from Panasonic® , or some variation on the 18650 form-factor of 6.5 cm x 1.8 cm and aproximately 45 g. The battery 202 may have at least two terminals. In some embodiments, a positive terminal 204 may be located at the top of the battery 202, and a negative terminal 206 may be located on the eopposite bottom side of the battery 202.

In some embodiments, some or all of the battery cells forming a battery pack 106 can be oriented in the same direction. In other words, the positive terminal of each of the individual battery cells may face in an upward (or downward) direction relative to the battery pack, and each of the negative terminals faces in a downward direction. In other embodiments, this need not be the case. Alternating rows of individual battery cells may be oriented in opposite direction such that the positive terminal of a first row is oriented in the up direction and the positive terminal of a second row is oriented in the downward direction. The orientation pattern for individual battery cells may vary without limitation. For example, every other battery cell in a row be oriented in opposite directions. In some embodiments, one half of the battery pack may have battery cells oriented in one direction, while the other half of the battery pack has cells oriented in the opposite direction. In any of these cases, connections may need to be established between batteries oriented in opposite directions or between batteries oriented in the same direction.

In order to make electrical connections between battery cells, a busbar may be used. As used herein, the term "busbar" refers to any metallic conductor that is connected to a plurality of individual battery cell terminals in order to transmit power from the individual battery cells to the electrical system of the electric vehicle. In some embodiments, the busbar may comprise a flat metallic sheet that is positioned on the top or the bottom of the battery pack. In some embodiments, the metallic sheet may cover an entire top or bottom of the battery pack, while in other embodiments, the busbar may comprise a strip that is longer than it is wide to interface with a single row of battery cells.

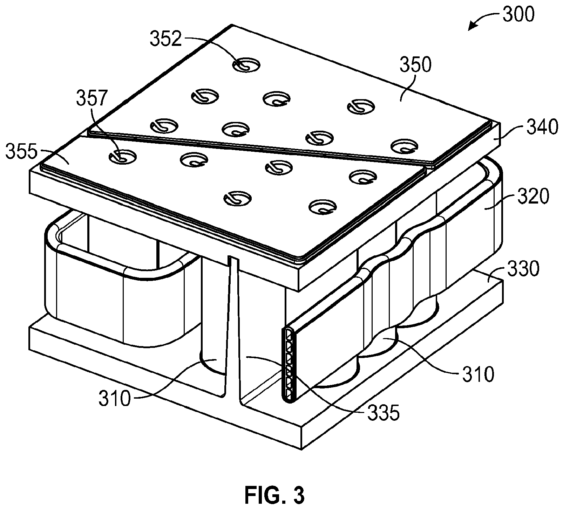

FIG. 3 is an illustration of battery pack 300, which includes battery cells 310, cooling duct 320, lower tray 330, upper tray 340, busbar 350, and busbar 355. Battery pack 300 also includes one or more busbars not shown connected to the underside of lower tray 330.

As shown, battery cells 310 are arranged so as to engage indentations in lower tray 330 and upper tray 340. Because of the indentations, lower tray 330 and upper tray 340 provide mechanical support which resists lateral or shearing forces. In some embodiments, lower tray 330 and upper tray 340 are nonconductive. For example lower tray 330 and upper tray 340 may be formed with an injection molded plastic.

In addition, battery cells 310 are arranged so as to be supported by cooling duct 320. Cooling duct 320 also provides mechanical support resisting lateral or shearing forces. In addition, cooling duct 320 provides mechanical support to the battery cells during manufacturing, as discussed further below. Cooling duct 320 may also include fluid channels 325, through which a cooling fluid may be circulated so as to provide a path through which heat may be removed from the battery cells 310.

Busbars 350 and 355 are mechanically connected with upper tray 340. For example, the busbars 350 and 355 may be glued or welded to upper tray 340. Busbars 350 and 355 are conductive and provide electrical connections to the battery cells 310.

In this embodiment, busbar 350 also includes a plurlaity of contacts 352. The plurality of contacts 352 are configured to electrically connect one or several portions and/or layers of the busbar 350 with one or several battery cells 310, and specifically to the terminals of one or several battery cells 310. In some embodiments, one or several of the plurality of contacts 352 can be electrically connected with one or several conductive layers of the busbar 350 and/or with one or several conductive materials forming the busbar 350.

In this embodiment, busbar 355 also includes a plurlaity of contacts 357. The plurality of contacts 357 are configured to electrically connect one or several portions and/or layers of the busbar 355 with one or several battery cells 310, and specifically to the terminals of one or several battery cells 310. In some embodiments, one or several of the plurality of contacts 352 can be electrically connected with one or several conductive layers of the busbar 355 and/or with one or several conductive materials forming the busbar 355.

The battery cells 310 may be oriented such that busbar 350 provides an electrical connection with battery cell terminals of a first polarity and busbar 355 provides an electrical connection with battery cell terminals of a second polarity. For example, busbar 350 may provide an electrical connection with positive battery cell terminals, and busbar 355 may provide an electrical connection with negative battery terminals. Alternatively, busbar 350 may provide electrical connection with negative battery terminals, and busbar 355 may provide electrical connection with positive battery terminals.

Lower tray 330 also includes reinforcement rib 335, which is configured to connect lower tray 330 to upper tray 340. In some embodiments, lower tray 330 is removably connected to upper tray 340.

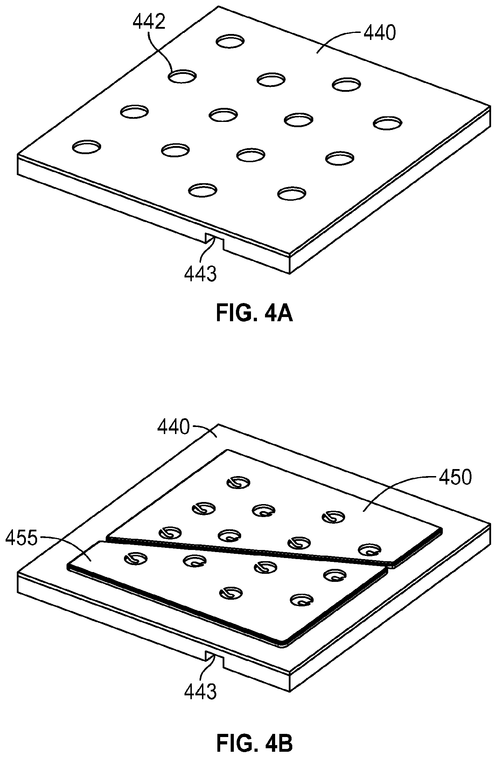

FIGs. 4A-4H is a series of views illustrating a process of manufacturing a battery pack, such as battery pack 300 of FIG. 3.

FIG. 4A is an illustration of an upper tray 440. Upper tray 440 may, for example, be formed with an injection molded plastic, or another nonconductive material. As shown upper tray 440 includes holes 442 through which batteries may make out an electrical connection with a busbar, discussed further below. Upper tray 440 also includes slot 443 configured to receive a reinforcement rib, discussed further below.

FIG. 4B is an illustration of upper tray 440 having busbars 450 and 455 attached thereto. Busbars 450 and 455 may comprise a conductive metal, and may be fixed to upper tray 440 with an adhesive material, a glue, an epoxy, or with another mechanism, such as a weld. In some embodiments, busbars 450 and 455 are attached to upper tray 440 through a heating process, which melts or partially melts the material of upper tray 440 such that once frozen, the material of upper tray 440 is fixed to busbars 450 and 455.

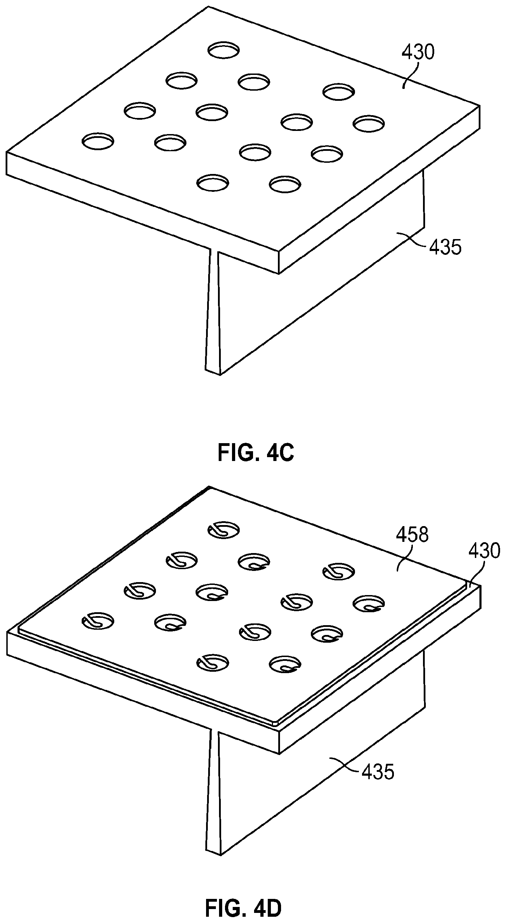

FIG. 4C is an illustration of a lower tray 430. Lower tray 430 may, for example, be formed with an injection molded plastic, or another nonconductive material. In the illustrated embodiment, lower tray 430 includes a protrusion, which forms a reinforcement rib 435.

FIG. 4D is an illustration of lower tray 430 having busbar 458 attached to the side thereof opposite the side from which reinforcement rib 435 protrudes. The busbar 458 may comprise a conductive metal, and may be fixed to lower tray 430 with an adhesive material, a glue, an epoxy, or with another mechanism, such as a weld. In some embodiments, busbar 458 is attached to lower tray 430 through a heating process, which melts or partially melts the material of lower tray 430 such that once frozen, the material of lower tray 430 is fixed to busbar 458.

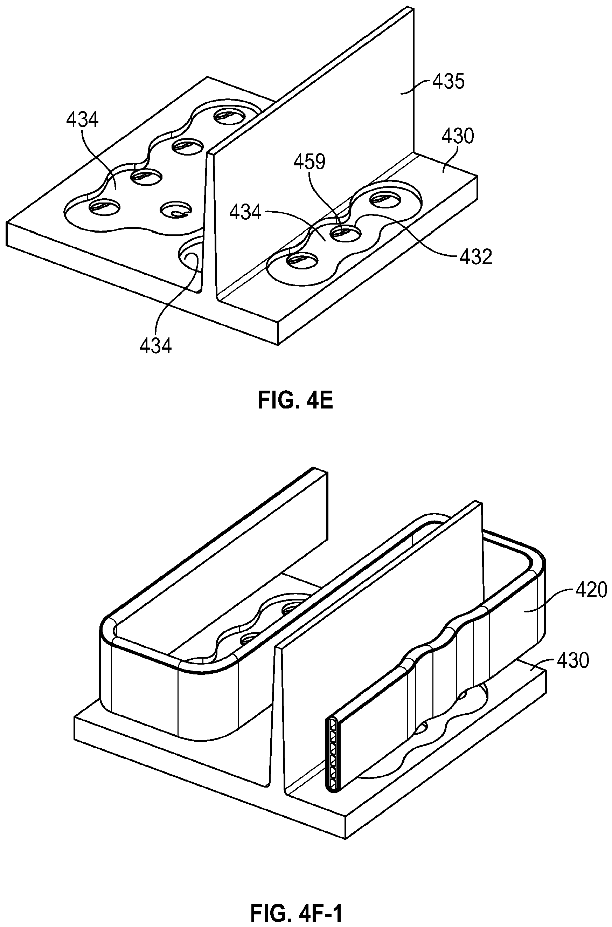

FIG. 4E is an illustration of lower tray 430 having busbar 458 attached thereto. Busbar 458 is on the opposite side of lower tray 430 shown. Contacts 459 of busbar 458 are visible through the holes 432 of lower tray 430.

As illustrated, lower tray 430 includes indentations 434 having shapes which correspond with an outline of a plurality of battery cells. In this embodiment, the holes 432 generally define a grid having a substantially regular pattern, where the pattern is interrupted by reinforcement rib 435, which occupies one of the grid positions.

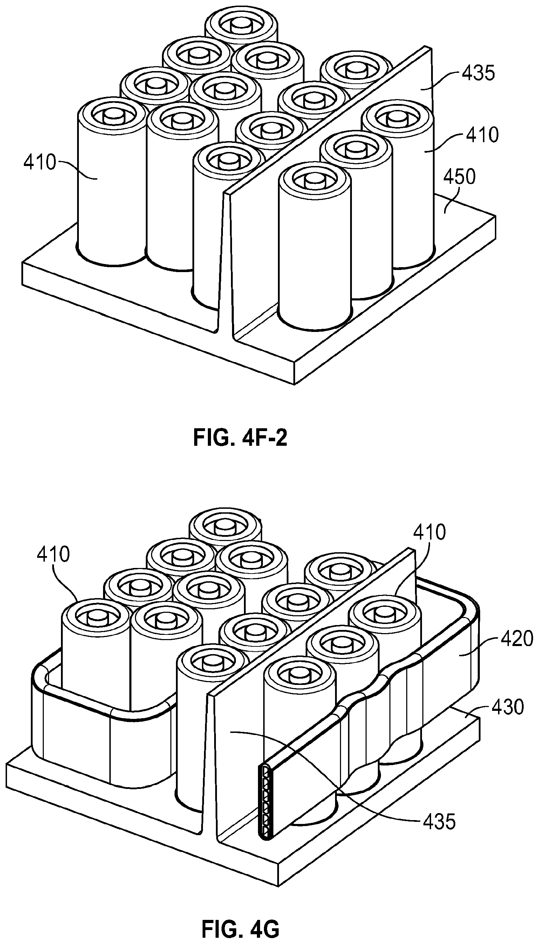

FIG. 4F-1 is an illustration of lower tray 430 and cooling duct 420. In some embodiments of the method of manufacturing, cooling duct 420 is attached to lower tray 430 or is held in proximity to lower tray 430 so as to be configured to receive and support the battery cells as they are placed in the indentations 434.

FIG. 4F-2 is an illustration of lower tray 430 and battery cells 410. In some embodiments of the method of manufacturing, battery cells 410 are placed in the indentations 434 of lower tray 430 prior to being supported by cooling duct 420. Battery cells 410 are placed in lower tray 430 so that the terminals of battery cells 410 near lower tray 430 electrically connect with contacts 459 of busbar 458, and so that the battery cells 410 engage and are held in place by the indentations 434 of lower tray 430. In some embodiments, the battery cells 410 are fixed to lower tray 430 with, for example, a glue or another fixing mechanism.In some embodiments, the battery cells 410 are not fixed to lower tray 430.

FIG. 4G is an illustration of lower tray 430, battery cells 410, and cooling duct 420. Battery cells 410 engage and are held in place by the indentations 434 of lower tray 430, and cooling duct 420 provides additional mechanical support to the battery cells 410 during manufacturing, such that the battery cells 410 are less likely to be removed from lower tray 430 by, for example, lateral or other forces.

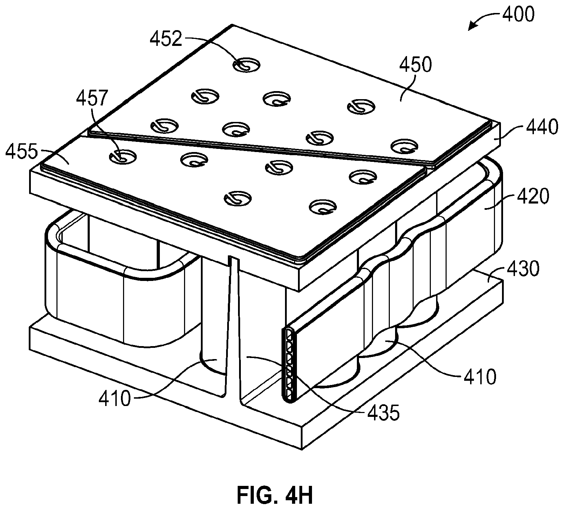

FIG. 4H is an illustration of the manufactured battery pack 400. As shown, upper tray 440 having busbars 450 and 455 attached thereto, has been attached to battery cells 410 such that the battery cells 410 engage and are held in place by the indentations of upper tray 440, and the terminals of battery cells 410 near upper tray 440 engage and form electrical connections with the contacts 452 of busbar 450 and engage and form electrical connections with the contacts 457 of busbar 455. In some embodiments, the battery cells 410 are fixed to upper tray 440 with, for example, a glue or another fixing mechanism. In some embodiments, the battery cells 410 are not fixed to upper tray 440.

Additionally, as shown, reinforcement rib 335 of lower tray 330 engages slot 433 of upper tray 430. In some embodiments, reinforcement rib 335 includes one or more protrusions (not shown) which extend into or through holes (not shown) in upper tray 430, which are placed so as to be aligned with the protrusions.

According to the invention, reinforcement rib 435 is integrated with lower tray 430 or with upper tray 440 and lower tray 430 or upper tray 440 includes a corresponding slot. In some embodiments not representing the invention, reinforcement rib 435 is partially integrated with upper tray 440 and is partially integrated with lower tray 430, and the partially integrated reinforcement ribs are configured to engage one another.

In some embodiments not representing the invention, reinforcement rib 435 is separate from both upper tray 440 and lower tray 430. In such embodiments, each of upper tray 440 and lower tray 430 comprises topological features, such as slots configured to receive the separate reinforcement rib 435.

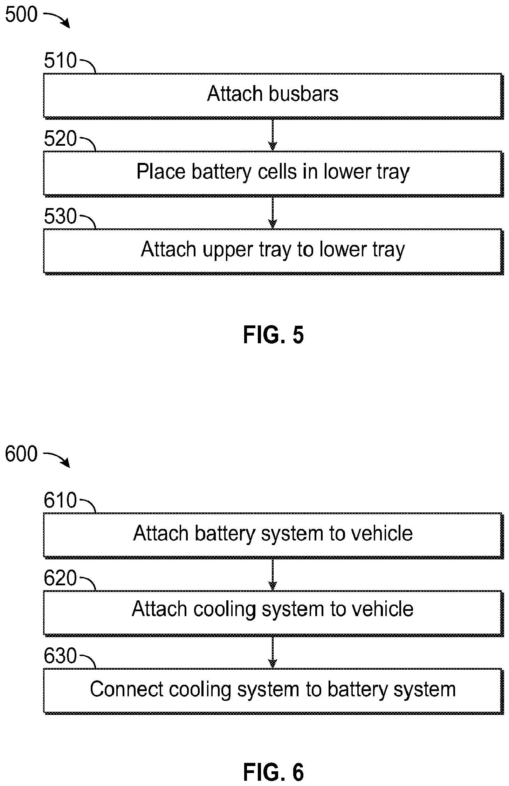

FIG. 5 is a flowchart illustrating one embodiment of a process 500 for manufacturing a rechargeable battery pack, such as those discussed herein. The method can include, for example, a process for manufacturing one or several battery packs 106 of rechargeable battery pack system 104, discussed above with reference to FIG.1.

The process begins at block 510, and may include attaching one or more busbars to a lower tray. The lower tray may be, for example, formed of a nonconductive plastic material, and may have indentations configured to receive battery cells. The one or more busbars may be attached to the lower tray on a side opposite the indentations. The one or more busbars may be attached to the lower tray using a glue or another fixing mechanism.

At 510, the process may additionally or alternatively include attaching one or more busbars to an upper tray. The upper tray may be, for example, formed of a nonconductive plastic material, and may have indentations configured to receive battery cells. The one or more busbars may be attached to the upper tray on a side opposite the indentations. The one or more busbars may be attached to the upper tray using a glue or another fixing mechanism.

The process 500 may also include placing battery cells in the lower tray, as shown in block 520. In some embodiments, the battery cells are fixed to the lower tray with, for example, a glue or another fixing mechanism. In some embodiments, the battery cells are not fixed to the lower tray. The battery cells are placed in the lower tray such that the battery cells engage and are held in place by the indentations of the lower tray. In addition, the battery cells are placed in the lower tray such that the terminals of the battery cells near the lower tray form an electrical connection with the contacts of the busbars attached to the lower tray.

The process 500 may also include attaching the upper tray to the lower tray, as shown in block 530. The upper tray is attached to the lower tray such that the reinforcement rib connects the upper tray and the lower tray. In some embodiments, the reinforcement rib connects the upper tray and a lower tray with, for example, a glue, a weld, or another fixing mechanism. In some embodiments, the battery cells are fixed to the upper tray with, for example, a glue or another fixing mechanism. In some embodiments, the battery cells are not fixed to the upper tray. The upper tray is attached to the lower tray such that the battery cells engage and are held in place by the indentations of the upper tray. In addition, the upper tray is attached to the lower tray such that the terminals of the battery cells near the upper tray form an electrical connection with the contacts of the busbars attached to the upper tray.

The reinforcement rib also provides mechanical support protecting the battery cells from forces resulting from, for example, vertical impact. For example, battery pack may be configured such that the reinforcement rib transfers a vertical force between the upper and lower trays and with no or substantially no vertical force being transferred by the battery cells themselves.

In alternative embodiments, the battery cells are fixed to the busbars, for example, with a glue, or another attachment mechanism, such as a weld. In such embodiments, the battery cells may additionally be attched to the upper tray and/or lower tray by a glue or another attachment mechanism. In some embodiments, the battery cells are held against the upper tray and/or lower tray by the reinforcement rib attaching the upper tray to the lower tray, and are not otherwise attached to the upper tray and/or lower tray.

In alternative embodiments, the battery cells are not fixed to one or both of the upper and lower trays. In such embodiments, the upper tray may be connected to the lower tray by a glue or another attachment mechanism. In some embodiments, the battery cells are held against the upper tray and/or lower tray by the attachment mechanism attaching the upper tray to the lower tray, and are not otherwise attached to the upper tray and/or lower tray.

The process 500 may additionally include electrically connecting the rechargeable battery system with a motor configured to provide power to the vehicle.

It should be appreciated that the specific steps illustrated in FIG. 5 provide particular methods of providing a rechargeable battery system and/or a battery pack for an electric vehicle according to various embodiments of the present invention. Other sequences of steps may also be performed according to alternative embodiments. For example, alternative embodiments of the present invention may perform the steps outlined above in a different order. Moreover, the individual steps illustrated in FIG. 5 may include multiple sub-steps that may be performed in various sequences as appropriate to the individual step. Furthermore, additional steps may be added or removed depending on the particular applications. One of ordinary skill in the art would recognize many variations, modifications, and alternatives.

FIG. 6 is a flowchart illustrating one embodiment of a process 600 for manufacturing a vehicle having a rechargeable battery system, such as those discussed herein.

The process begins at block 610, and may include attaching a rechargeable battery system to the vehicle, where the rechargeable battery system includes an upper tray attached to a lower tray with a reinforcement rib, a plurality of battery cells between the upper and lower trays, and a cooling duct having fluid channels between the upper and lower trays or integrated with one of the upper and lower trays.

At 620, the process additionally includes attaching a cooling system to the vehicle. The cooling system may, for example, have connecting lines configured to connect a heat exchanger to the rechargeable battery system. The connecting lines can include an inlet line and an outlet line. The inlet line may be configured to transport a cooling fluid, such as a refrigerant to the rechargeable battery system. The outlet line may be configured to transport the cooling fluid from the rechargeable battery system to the cooling system.

The process 600 may also include, at 630, fluidly connecting the cooling duct, and specifically the fluid channels of the cooling duct to the cooling system. In some embodiments, connecting the cooling duct to the cooling system can include connecting fluid channels of the cooling duct to a heat exchanger of the cooling system. In some embodiments, connecting the cooling duct to the cooling system can include connecting the cooling duct, and specifically the fluid channels of the cooling duct to the cooling system via connecting lines and specifically via an inlet line and/or via an outlet line.

The process 600 may also include filling the cooling system and the fluid channels of the cooling duct with a cooling fluid, which cooling fluid can be a refrigerant. In some embodiments, the filling of the cooling system and the fluid channels with a cooling fluid can also include filling a heat exchanger with the cooling fluid. In some embodiments, the cooling system can be configured to circulate the cooling fluid through the fluid channels of the cooling duct to maintain a desired temperature of the battery cells of the rechargeable battery system.

The process may additionally include electrically connecting the rechargeable battery system with a motor configured to provide power to the vehicle.

It should be appreciated that the specific steps illustrated in FIG. 6 provide particular methods of providing a rechargeable battery system and/or a battery pack for an electric vehicle according to various embodiments of the present invention. Other sequences of steps may also be performed according to alternative embodiments. For example, alternative embodiments of the present invention may perform the steps outlined above in a different order. Moreover, the individual steps illustrated in FIG. 6 may include multiple sub-steps that may be performed in various sequences as appropriate to the individual step. Furthermore, additional steps may be added or removed depending on the particular applications. One of ordinary skill in the art would recognize many variations, modifications, and alternatives.

In the foregoing description, for the purposes of explanation, numerous specific details were set forth in order to provide a thorough understanding of various embodiments of the present invention. It will be apparent, however, to one skilled in the art that embodiments of the present invention may be practiced without some of these specific details. In other instances, well-known structures and devices are shown in block diagram form.

Specific details are given in the foregoing description to provide a thorough understanding of the embodiments. However, it will be understood by one of ordinary skill in the art that the embodiments may be practiced without these specific details. For example, circuits, systems, networks, processes, and other components may have been shown as components in block diagram form in order not to obscure the embodiments in unnecessary detail. In other instances, well-known circuits, processes, algorithms, structures, and techniques may have been shown without unnecessary detail in order to avoid obscuring the embodiments.

Also, it is noted that individual embodiments may have beeen described as a process which is depicted as a flowchart, a flow diagram, a data flow diagram, a structure diagram, or a block diagram. Although a flowchart may have described the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

## Claims

1. A battery pack for an electric vehicle, the battery pack comprising:
an upper tray;
a first busbar attached to the upper tray;
a lower tray;
a second busbar attached to the lower tray;
a plurality of battery cells arranged in the upper and lower trays; and
a reinforcement rib, integral to one of the upper and lower trays and protruding therefrom, mechanically connecting the lower tray to the upper tray;
wherein the other of the upper and lower trays comprises a slot configured to receive the reinforcement rib.

2. The battery pack of claim 1, wherein the reinforcement rib is configured to transfer a vertical force between the upper and lower trays.

3. The battery pack of claim 2, wherein while the reinforcement rib transfers the vertical force between the upper and lower trays, the battery cells transfer substantially no force between the upper and lower trays.

4. The battery pack of claim 1, 2 or 3, wherein the reinforcement rib is integral to the lower tray, or wherein the reinforcement rib is integral to willi the upper tray.

5. The battery pack of any of claims 1 to 4, wherein the reinforcement rib extends into a hole through at least one of the upper and lower trays.

6. A method of manufacturing a battery pack for an electric vehicle, the method comprising:
attaching a busbar to an upper tray;
attaching first sides of a plurality of battery cells to the upper tray;
attaching a busbar to a lower tray;
attaching second sides of the battery cells to the lower tray; and
connecting the lower tray and the upper tray with a reinforcement rib, integral to one of the upper and lower trays and protruding therefrom;
wherein the other of the upper and lower trays comprises a slot configured to receive the reinforcement rib.

7. The method of claim 6, wherein the reinforcement rib is configured to transfer a vertical force between the upper and lower trays.

8. The method of claim 7, wherein while the reinforcement rib transfers the vertical force between the upper and lower trays, the battery cells transfer substantially no force between the upper and lower trays.

9. The method of claim 6, 7 or 8, wherein the reinforcement rib is integral to the lower tray, or wherein the reinforcement rib is integral to with the upper tray.

10. The method of any of claims 6 to 9, wherein the reinforcement rib extends into a hole through at least one of the upper and lower trays.

11. An electric vehicle powered by a battery pack, the battery pack comprising:
an upper tray;
a first busbar attached to the upper tray;
a lower tray;
a second busbar attached to the lower tray;
a plurality of battery cells arranged in the upper and lower trays; and
a reinforcement rib, integral to one of the upper and lower trays and protruding therefrom, mechanically connecting the lower tray to the upper tray;
wherein the other of the upper and lower trays comprises a slot configured to receive the reinforcement rib.

12. The electric vehicle of claim 11, wherein the reinforcement ribis configured to transfer a vertical force between the upper and lower trays.

13. The electric vehicle of claim 12, wherein while the reinforcement ribtransfers the vertical force between the upper and lower trays, the battery cells transfer substantially no force between the upper and lower trays.

14. The electric vehicle of claim 11, 12 or 13, wherein the reinforcement rib is integral to the lower tray, or wherein the reinforcement rib is integral to the upper tray.

15. The electric vehicle of any of claims 11 to 14, wherein the reinforcement rib extends into a hole through at least one of the upper and lower trays.

## Patentansprüche

1. Batteriepack für ein Elektrofahrzeug, wobei der Batteriepack Folgendes aufweist:
eine obere Wanne;
eine erste Sammelschiene, die an der oberen Wanne angebracht ist;
eine untere Wanne;
eine zweite Sammelschiene, die an der unteren Wanne angebracht ist,
mehrere Batteriezellen, die in der oberen und unteren Wanne angeordnet sind; und
eine Verstärkungsrippe, die mit einer von der oberen und der unteren Wanne einstückig ist und davon vorsteht, wobei sie die untere Wanne mechanisch mit der oberen Wanne verbindet;
wobei die andere von der oberen und der unteren Wanne einen zur Aufnahme der Verstärkungsrippe gestalteten Spalt aufweist.

2. Batteriepack nach Anspruch 1, wobei die Verstärkungsrippe zur Übertragung einer vertikalen Kraft zwischen der oberen und der unteren Wanne gestaltet ist.

3. Batteriepack nach Anspruch 2, wobei die Batteriezellen während der Übertragung der vertikalen Kraft zwischen der oberen und der unteren Wanne durch die Verstärkungsrippe im Wesentlichen keine Kraft zwischen der oberen und der unteren Wanne übertragen.

4. Batteriepack nach Anspruch 1, 2 oder 3, wobei die Verstärkungsrippe mit der unteren Wanne einstückig ist oder wobei die Verstärkungsrippe mit der oberen Wanne einstückig ist.

5. Batteriepack nach einem der Ansprüche 1 bis 4, wobei die Verstärkungsrippe sich durch wenigstens eine von der oberen und der unteren Wanne in ein Loch erstreckt.

6. Verfahren zur Herstellung eines Batteriepacks für ein Elektrofahrzeug, wobei das Verfahren Folgendes aufweist:
Anbringen einer Sammelschiene an einer oberen Wanne;
Anbringen erster Seiten von mehreren Batteriezellen an der oberen Wanne;
Anbringen einer Sammelschiene an einer unteren Wanne;
Anbringen zweiter Seiten der Batteriezellen an der unteren Wanne und
Verbinden der unteren Wanne und der oberen Wanne durch eine Verstärkungsrippe, die mit einer von der oberen und der unteren Wanne einstückig ist und davon vorsteht;
wobei die andere von der unteren und der oberen Wanne einen zur Aufnahme der Verstärkungsrippe gestalteten Spalt aufweist.

7. Verfahren nach Anspruch 6, wobei die Verstärkungsrippe zum Übertragen einer vertikalen Kraft zwischen der unteren und der oberen Wanne gestaltet ist.

8. Verfahren nach Anspruch 7, wobei die Batteriezellen während der Übertragung der vertikalen Kraft zwischen der oberen und der unteren Wanne durch die Verstärkungsrippe im Wesentlichen keine Kraft zwischen der oberen und der unteren Wanne übertragen.

9. Verfahren nach Anspruch 6, 7 oder 8, wobei die Verstärkungsrippe mit der unteren Wanne einstückig ist oder wobei die Verstärkungsrippe mit der oberen Wanne einstückig ist.

10. Verfahren nach einem der Ansprüche 6 bis 9, wobei die Verstärkungsrippe sich durch wenigstens eine von der oberen und der unteren Wanne in ein Loch erstreckt.

11. Elektrofahrzeug, das von einem Batteriepack angetrieben wird, wobei der Batteriepack Folgendes aufweist:
eine obere Wanne;
eine erste Sammelschiene, die an der oberen Wanne angebracht ist;
eine untere Wanne;
eine zweite Sammelschiene, die an der unteren Wanne angebracht ist,
mehrere Batteriezellen, die in der oberen und unteren Wanne angeordnet sind; und
eine Verstärkungsrippe, die mit einer von der oberen und der unteren Wanne einstückig ist und davon vorsteht, wobei sie die untere Wanne mechanisch mit der oberen Wanne verbindet;
wobei die andere von der oberen und der unteren Wanne einen zur Aufnahme der Verstärkungsrippe gestalteten Spalt aufweist.

12. Elektrofahrzeug nach Anspruch 11, wobei die Verstärkungsrippe zur Übertragung einer vertikalen Kraft zwischen der oberen und der unteren Wanne gestaltet ist.

13. Elektrofahrzeug nach Anspruch 12, wobei die Batteriezellen während der Übertragung der vertikalen Kraft zwischen der oberen und der unteren Wanne durch die Verstärkungsrippe im Wesentlichen keine Kraft zwischen der oberen und der unteren Wanne übertragen.

14. Elektrofahrzeug nach Anspruch 11, 12 oder 13, wobei die Verstärkungsrippe mit der unteren Wanne einstückig ist oder wobei die Verstärkungsrippe mit der oberen Wanne einstückig ist.

15. Elektrofahrzeug nach einem der Ansprüche 11 bis 14, wobei die Verstärkungsrippe sich durch wenigstens eine von der oberen und der unteren Wanne in ein Loch erstreckt.

## Revendications

1. Bloc-batterie pour un véhicule électrique, le bloc-batterie comprenant :
un bac supérieur ;
une première barre omnibus attachée au bac supérieur ;
un bac inférieur ;
une deuxième barre omnibus attachée au bac inférieur ;
une pluralité de cellules de batterie arrangées dans le bac supérieur et le bac inférieur ; et
une nervure de renforcement, faisant partie intégrante de l'un d'entre le bac supérieur et le bac inférieur et faisant saillie de là, joignant mécaniquement le bac inférieur et le bac supérieur ;
dans lequel l'autre d'entre le bac supérieur et le bac inférieur comprend une fente configurée pour recevoir la nervure de renforcement.

2. Bloc-batterie selon la revendication 1, dans lequel la nervure de renforcement est configurée pour transférer une force verticale entre le bac supérieur et le bac inférieur.

3. Bloc-batterie selon la revendication 2, dans lequel tandis que la nervure de renforcement transfère la force verticale entre le bac supérieur et le bac inférieur, les cellules de batterie ne transfèrent sensiblement aucune force entre le bac supérieur et le bac inférieur.

4. Bloc-batterie selon la revendication 1, 2 ou 3, dans lequel la nervure de renforcement fait partie intégrante du bac inférieur, ou bien dans lequel la nervure de renforcement fait partie intégrante du bac supérieur.

5. Bloc-batterie selon l'une quelconque des revendications 1 à 4, dans lequel la nervure de renforcement s'étend dans un trou à travers au moins l'un d'entre le bac supérieur et le bac inférieur.

6. Procédé de fabrication d'un bloc-batterie pour un véhicule électrique, le procédé comprenant :
attacher une barre omnibus à un bac supérieur ;
attacher des premiers côtés d'une pluralité de cellules de batterie au bac supérieur ;
attacher une barre omnibus à un bac inférieur ;
attacher des deuxièmes côtés de la pluralité de cellules de batterie au bac inférieur ; et
joindre le bac inférieur et le bac supérieur avec une nervure de renforcement, faisant partie intégrante de l'un d'entre le bac supérieur et le bac inférieur et faisant saillie de là ;
dans lequel l'autre d'entre le bac supérieur et le bac inférieur comprend une fente configurée pour recevoir la nervure de renforcement.

7. Procédé selon la revendication 6, dans lequel la nervure de renforcement est configurée pour transférer une force verticale entre le bac supérieur et le bac inférieur.

8. Procédé selon la revendication 7, dans lequel tandis que la nervure de renforcement transfère la force verticale entre le bac supérieur et le bac inférieur, les cellules de batterie ne transfèrent sensiblement aucune force entre le bac supérieur et le bac inférieur.

9. Procédé selon la revendication 6, 7 ou 8, dans lequel la nervure de renforcement fait partie intégrante du bac inférieur, ou bien dans lequel la nervure de renforcement fait partie intégrante du bac supérieur.

10. Procédé selon l'une quelconque des revendications 6 à 9, dans lequel la nervure de renforcement s'étend dans un trou à travers au moins l'un d'entre le bac supérieur et le bac inférieur.

11. Véhicule électrique actionné par un bloc-batterie, le bloc-batterie comprenant :
un bac supérieur ;
une première barre omnibus attachée au bac supérieur ;
un bac inférieur ;
une deuxième barre omnibus attachée au bac inférieur ;
une pluralité de cellules de batterie arrangées dans le bac supérieur et le bac inférieur ; et
une nervure de renforcement, faisant partie intégrante de l'un d'entre le bac supérieur et le bac inférieur et faisant saillie de là, joignant mécaniquement le bac inférieur et le bac supérieur ;
dans lequel l'autre d'entre le bac supérieur et le bac inférieur comprend une fente configurée pour recevoir la nervure de renforcement.

12. Véhicule électrique selon la revendication 11, dans lequel la nervure de renforcement est configurée pour transférer une force verticale entre le bac supérieur et le bac inférieur.

13. Véhicule électrique selon la revendication 12, dans lequel tandis que la nervure de renforcement transfère la force verticale entre le bac supérieur et le bac inférieur, les cellules de batterie ne transfèrent sensiblement aucune force entre le bac supérieur et le bac inférieur.

14. Véhicule électrique selon la revendication 11, 12 ou 13, dans lequel la nervure de renforcement fait partie intégrante du bac inférieur, ou bien dans lequel la nervure de renforcement fait partie intégrante du bac supérieur.

15. Véhicule électrique selon l'une quelconque des revendications 11 à 14, dans lequel la nervure de renforcement s'étend dans un trou à travers au moins l'un d'entre le bac supérieur et le bac inférieur.
